(19) Europäisches Patentamt
European Patent Office
Office européen des brevets

(11) **EP 2 705 751 B1**

(12) **FASCICULE DE BREVET EUROPEEN**

(45) Date de publication et mention
de la délivrance du brevet:
**01.05.2019   Bulletin 2019/18**

(51) Int Cl.:
***A01M 7/00*** *(2006.01)*

(21) Numéro de dépôt: **13183414.5**

(22) Date de dépôt: **06.09.2013**

(54) **Procédé automatique de détermination d'un paramètre de modélisation d'un système d'épandage, procédé de commande et système d'épandage utilisant un tel paramètre**

Automatisches Verfahren zur Bestimmung eines Modellerstellungsparameters eines Streuungssystems, Streuerverfahren und Streuungssystem, die einen solchen Parameter verwenden

Method for automatically determining a modelling parameter of a sprayer system, control method and sprayer system using such a parameter

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **07.09.2012   FR 1258409**

(43) Date de publication de la demande:
**12.03.2014   Bulletin 2014/11**

(73) Titulaire: **EXEL INDUSTRIES**
**51200 Epernay (FR)**

(72) Inventeurs:
• **Ballu, Patrick**
  **51100 REIMS (FR)**
• **Gillet, Alain**
  **69220 SAINT LAGER (FR)**

(74) Mandataire: **Ahner, Philippe et al**
**BREVALEX**
**95, rue d'Amsterdam**
**75378 Paris Cedex 8 (FR)**

(56) Documents cités:
**FR-A1- 2 519 162**

• **Daniel R. Ess ET AL: "Implementing Site-Specific Management: Sprayer Technology - Controlling Application Rate On-The-Go", , 15 juillet 2010 (2010-07-15), XP055064069, Extrait de l'Internet: URL:http://web.archive.org/web/20100715070 055/http://www.extension.purdue.edu/extmed ia/AE/SSM-4-W.pdf [extrait le 2013-05-24]**
• **E. Wolf Robert ET AL: "Calibrating Boom Sprayers", , 1 mars 2009 (2009-03-01), XP055064128, Extrait de l'Internet: URL:http://www.ksre.ksu.edu/bookstore/pubs /MF2894.pdf [extrait le 2013-05-27]**

**Description**

L'invention a trait à un procédé automatique de détermination d'au moins un paramètre de modélisation d'un système d'épandage d'un produit de traitement du sol ou de culture. Un tel produit peut être un engrais, un produit d'amendement de la nature du sol, ou un produit phytosanitaire.

L'invention concerne également un procédé de commande d'un système d'épandage, ainsi qu'un système d'épandage pouvant être commandé par un tel procédé.

Dans le domaine de l'épandage de produit de traitement du sol ou de culture, il est connu d'embarquer sur un tracteur ou une remorque un système d'épandage comprenant une rampe de pulvérisation équipée de buses destinées à projeter le produit vers le sol ou vers la culture. Selon les prescriptions du fabricant de ce produit, une certaine dose de produit doit être appliquée par hectare et le débit de produit à amener à la rampe est calculé en fonction de la largeur de travail de la rampe et de la vitesse de l'engin sur lequel est embarqué le système d'épandage. Il est connu d'adapter le débit de produit fourni à la rampe en fonction de la vitesse de l'engin, afin d'obtenir une dose à l'hectare aussi constante que possible.

Le débit de produit fourni à la rampe peut être mesuré à l'aide d'un débitmètre qui opère une lecture directe du débit de produit circulant dans une conduite d'alimentation de la rampe. Ce type de mesure impose de renseigner en permanence le nombre de buses de la rampe effectivement utilisées, ce nombre étant variable au cours d'une opération d'épandage, notamment pour tenir compte de la géométrie réelle du champ en cours de traitement, ce champ n'étant pas forcément rectangulaire et n'ayant pas forcément une largeur multiple de la longueur totale de la rampe. Le système connait le nombre de buses utilisées par l'état des tronçons utilisés mais cela impose d'avoir mémorisé préalablement le nombre de buses par tronçon, sauf à induire des erreurs de dosage. En revanche avec ce type de mesure le volume réellement épandu s'obtient par simple enregistrement des valeurs du débitmètre.

Il est connu d'un article de Ess et al. intitulé « Implementing Site-Specific Management : Sprayer Technology - Controlling Application Rate On-The-Go » (Purdue University - 15.07.2010) d'utiliser une règle de proportionnalité entre le débit du produit liquide au niveau d'une buse et la racine carrée de la pression du produit. L'installation d'épandage envisagée dans cet article étant dépourvue de capteur de pression, elle ne permet pas de mesurer la pression au niveau d'une buse ni de déduire un coefficient de proportionnalité entre le débit et la racine carrée de la pression du produit au niveau de la buse.

Il est également connu de FR-A-2 519 162 de déterminer un paramètre de modélisation d'un système d'épandage en mesurant une pression et un débit lors de la projection d'un produit de traitement. Ceci conduit à une surconsommation de produit de revêtement, préjudiciable en termes écologiques et en termes de coût.

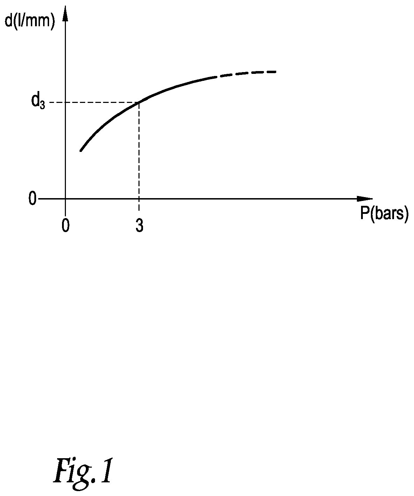

Selon une autre approche, il est possible de mesurer la pression d'alimentation dans une conduite d'alimentation de la rampe en considérant que chaque buse présente une courbe de débit en fonction de sa pression d'alimentation du type de celle représentée à la figure 1 ci-jointe. Par exemple, en considérant que les buses ont un type de comportement analogue en termes de débit/pression, chaque buse peut être identifiée par un point de fonctionnement correspondant à son modèle lorsqu'elle est alimentée avec une pression de trois bars. Dans ce cas, le débit $d_3$ délivré par la buse est un débit caractéristique permettant d'identifier la buse et correspondant à son modèle.

En pratique, la courbe de la figure 1 peut être considérée comme représentative d'une variation du débit en fonction de la pression sous la forme

$$d = k \times \sqrt{P} \hspace{4cm} \text{(équation 1)}$$

où d est le débit délivré par la buse en l/minute, P est la pression d'alimentation de la buse en bars et k est un coefficient de proportionnalité.

Lorsqu'un tel mode de régulation est utilisé, la consigne de dose à l'hectare est transformée en consigne de pression d'alimentation des buses, en connaissant le modèle débit/pression de chaque buse et l'intervalle entre deux buses adjacentes le long de la rampe de pulvérisation. Avec ce type de régulation, une unité électronique ajuste la pression d'alimentation de la rampe de pulvérisation en fonction d'une valeur de consigne de pression et de la pression réelle mesurée. Dans ce cas, la dose à l'hectare ne dépend pas du nombre de buses utilisées, qui peut varier en cours de pulvérisation d'un champ, comme envisagé ci-dessus.

Cette approche donne globalement satisfaction.

Elle présente toutefois des limitations. En particulier, elle ne permet pas de connaître, de façon simple, le volume épandu au cours d'une opération de traitement d'un champ. Elle ne permet pas non plus de détecter le bouchage d'une buse. Enfin et surtout, la précision de la régulation effectuée dépend de la détermination du coefficient de proportionnalité k, ce coefficient pouvant varier d'un système de pulvérisation à l'autre, en fonction de la longueur et de la conformation des tuyaux d'alimentation, et d'un jeu de buses à l'autre au sein d'une même rampe. Un tel coefficient est généralement déterminé à partir de données fournies par le fabricant des buses, alors que les coefficients réels des différentes buses peuvent présenter une certaine dispersion par rapport à une valeur nominale donnée par le fabricant, d'où un risque d'imprécision du dosage du produit épandu.

C'est à ces inconvénients et limitations qu'entend plus particulièrement répondre l'invention en proposant un nouveau procédé automatique de détermination d'au moins un paramètre, qui permet à un opérateur de connaître, de façon particulièrement aisée, un coefficient utilisable pour la modélisation d'un système d'épandage, avec une précision satisfaisante.

A cet effet, l'invention selon la revendication 1 concerne un procédé automatique de détermination d'au moins un paramètre de modélisation d'un système d'épandage d'un produit de traitement du sol ou de culture, ce système comprenant une rampe de pulvérisation équipée de buses, des moyens d'alimentation des buses en produit de traitement et une unité électronique prévue pour commander les moyens d'alimentation en fonction d'une valeur de consigne de la pression d'alimentation des buses en produit de traitement. Ce procédé comprend des étapes consistant à :

a) fixer une pression de référence d'alimentation des buses ;
b) pulvériser un produit, en utilisant la pression de référence comme pression de consigne d'alimentation des buses et en mesurant la pression d'alimentation des buses ;
c) mesurer, à l'aide d'un débitmètre, le débit de produit de traitement alimentant la rampe, et
d) calculer le paramètre de modélisation en fonction de la valeur mesurée de débit et de la valeur mesurée de la pression d'alimentation des buses ou de la pression de référence.

Conformément à l'invention, le produit pulvérisé lors de l'étape b) est de l'eau et la valeur du paramètre calculé à l'étape d) est corrigée, lors d'une étape e) ultérieure, en tenant compte de la densité du produit de traitement.

Grâce à l'invention, l'utilisation d'une unité électronique de régulation en pression et d'un débitmètre installé permet de déterminer de façon particulièrement simple le paramètre de modélisation, en tenant compte de l'implantation effective de la rampe et de la répartition effective des buses sur celle-ci. En d'autres termes, le paramètre de modélisation peut être déterminé de façon fiable, au moyen d'une procédure automatique qui ne requiert pas de compétences particulières de la part de l'opérateur.

Selon des aspects avantageux mais non obligatoires de l'invention, un tel procédé peut incorporer l'une ou plusieurs de caractéristiques suivantes prises dans toute combinaison techniquement admissible :

- Lors de l'étape b), toutes les buses de la rampe sont utilisées et le paramètre calculé lors de l'étape d) est valable pour l'ensemble de la rampe. En variante, la rampe est composée de plusieurs tronçons comprenant chacun au moins une buse, alors que les étapes b), c) et d) sont mises en oeuvre tronçon par tronçon.
- Les étapes a) à d) sont répétées pour plusieurs valeurs de pression de référence.
- Le paramètre déterminé est un coefficient de proportionnalité entre, d'une part, la racine carrée de la valeur de la pression mesurée ou de la pression de référence fixée à l'étape a) et, d'autre part, la valeur du débit mesuré à l'étape c).
- Le procédé est réalisé de façon totalement automatique.

L'invention concerne également un procédé de commande d'un système d'épandage d'un produit de traitement de sol ou de culture, du type du système d'épandage mentionné ci-dessus. Ce procédé comprend une étape de détermination de la valeur de consigne de pression en fonction, d'une part, d'une valeur de consigne de débit de produit de traitement et, d'autre part, d'un paramètre déterminé grâce à un procédé automatique de détermination tel que mentionné ci-dessus. En outre, il est prévu une étape supplémentaire de détection du bouchage éventuel d'une buse par comparaison, d'une part, d'un débit total de produit de traitement, calculé à l'aide du paramètre déterminé en fonction de la valeur de consigne de pression utilisée pour commander les moyens d'alimentation et, d'autre part, d'un débit total mesuré par le débitmètre.

De façon avantageuse, la valeur de consigne de pression est déterminée sur la base d'une équation du type $P_c = (k \times d_c)^2$ où $P_c$ est la valeur de consigne de pression, $d_c$ est la valeur de consigne de débit et k est le paramètre déterminé, comme mentionné ci-dessus.

Un autre aspect avantageux de l'invention est mentionné à la revendication 9.

Enfin, l'invention selon la revendication 10 concerne un système d'épandage embarqué sur un engin roulant pour la mise en oeuvre d'un procédé tel que mentionné ci-dessus. Ce système comprend :

- une cuve de produit de traitement à épandre ;
- au moins une rampe de buses de pulvérisation de ce produit ;
- des moyens d'alimentation de la rampe à partir de la cuve ;
- un capteur de la pression du produit dans un conduit d'alimentation de la rampe ;

- un débitmètre apte à détecter le débit de produit liquide alimentant la rampe
- une unité électronique prévue pour :

  - déterminer automatiquement le paramètre de modélisation sur la base, entre autres, d'un signal de sortie du débitmètre et d'un signal de sortie du capteur de pression, ce signal de sortie étant obtenu lorsque le produit pulvérisé est de l'eau et le paramètre de modélisation étant déterminé après application d'une correction tenant compte de la densité du produit de traitement,
  - déterminer automatiquement une valeur de consigne de pression d'alimentation de la rampe en produit à épandre en fonction, d'une part, d'une valeur de consigne de débit de produit de traitement et, d'autre part, du paramètre déterminé et
  - commander automatiquement les moyens d'alimentation en fonction de la valeur de consigne de pression.

L'invention sera mieux comprise et d'autres avantages de celle-ci apparaîtront plus clairement à la lumière de la description qui va suivre de procédés et d'un système d'épandage conformes à son principe, donnée uniquement à titre d'exemple et faite en référence aux dessins annexés dans lesquels :

- la figure 2 est une représentation schématique d'un système d'épandage conforme à l'invention ;
- la figure 3 est un schéma bloc d'un procédé conforme à l'invention et
- la figure 4 est un schéma bloc d'un autre procédé conforme à l'invention.

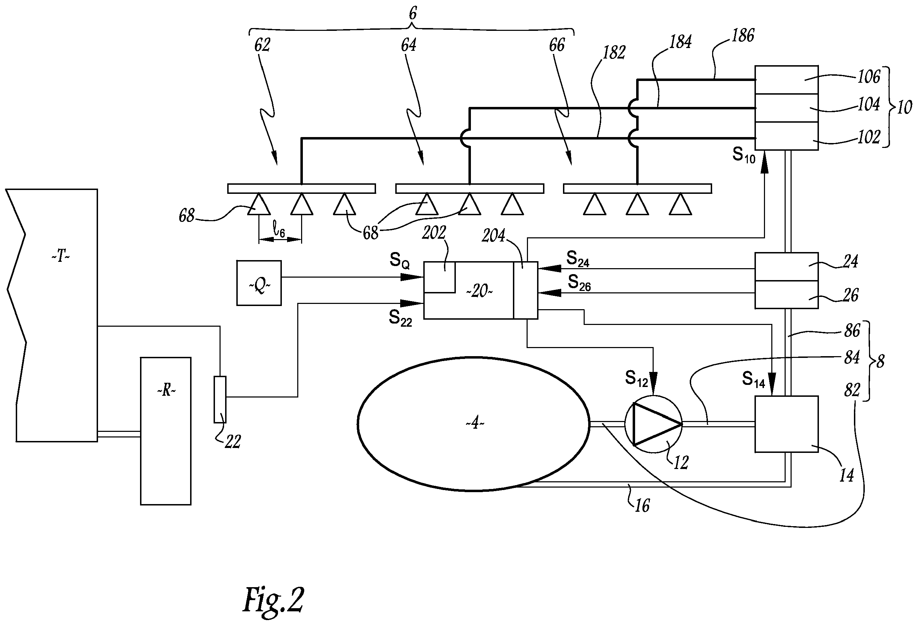

Le système d'épandage 2 représenté à la figure 2 comprend une cuve 4 et une rampe de pulvérisation 6 constituée de trois tronçons 62, 64 et 66 comportant chacun plusieurs buses de pulvérisation 68. Sur la figure 2, chaque tronçon 62 à 66 comporte trois buses 68. En pratique, le nombre de buses de chaque tronçon peut être largement supérieur à trois et les tronçons peuvent avoir des nombres de buses différents.

On note $\ell_6$ la longueur, mesurée parallèlement à la plus grande dimension d'un tronçon 62, 64 ou 66, d'un espace interbuse défini entre les centres de deux buses 68 adjacentes. En pratique, cette longueur $\ell_6$ peut avoir une valeur comprise entre 250 et 600 mm.

La cuve 4 contient un produit liquide de traitement du sol ou de culture. Il peut s'agir d'un produit d'amendement du sol, d'un engrais ou d'un produit phytosanitaire, tel qu'un insecticide.

Une conduite principale 8 relie la cuve 4 à un ensemble 10 d'électrovannes à boisseaux destinées à contrôler l'alimentation de la rampe 6 en produit de traitement.

La conduite principale comprend un premier tronçon 82 qui s'étend entre la cuve 4 et une pompe volumétrique 12. En variante, la pompe 12 peut être d'un autre type. Un deuxième tronçon 84 de la conduite 8 s'étend entre la sortie de la pompe 12 et une vanne trois voies 14 qui alimente sélectivement un troisième tronçon 86 de la conduite 8 ou un conduit 16 de retour à la cuve 4.

L'ensemble 10 comprend trois électrovannes 102, 104 et 106 contrôlant respectivement la circulation de produit de traitement de la conduite 8 vers les tronçons 62, 64 et 66, à travers des tuyaux dédiés 182, 184 et 186.

En variante, les électrovannes 102, 104 et 106 peuvent être du type à clapets ou ou tout autre type.

Le système d'épandage 2 comprend également une unité électronique de commande 20 capable de piloter les sous-ensembles 10, 12 et 14. Plus précisément, l'unité 20 émet à destination de l'ensemble de vannes 10 un signal électrique de commande $S_{10}$ véhiculé par une ligne électrique non représentée. De la même façon, l'unité 20 émet à destination de la vanne 12 et de la vanne trois voies 14 des signaux électriques de commande $S_{12}$ et $S_{14}$ véhiculés par des lignes électriques.

L'unité électronique 20 comprend, entre autres, une mémoire 202 et un calculateur 204 capable de réaliser des opérations arithmétiques et logiques.

Le système d'épandage 2 est monté sur un engin tel qu'un tracteur agricole T pourvu d'une roue R. En variante, le système d'épandage 2 peut être monté sur une remorque. Le système 2 comprend un capteur 22 de rotation de la roue qui transmet à l'unité 20, via une ligne électrique non représentée, un signal électrique $S_{22}$ représentatif de la rotation de la roue R. Connaissant les dimensions de la roue R, l'unité 20 peut en déduire la vitesse de déplacement du tracteur T ainsi que la distance parcourue depuis un point d'origine.

Le système 2 comprend également un capteur 24 de mesure de la pression du produit de traitement dans le tronçon 86 de la conduite 8 ainsi qu'un débitmètre 26 permettant de déterminer le débit du produit de traitement dans la conduite 8. Les dispositifs 24 et 26 délivrent chacun un signal électronique $S_{24}$, respectivement $S_{26}$, à l'unité 20, via des lignes électriques non représentées.

En variante, les signaux $S_{10}$, $S_{12}$, $S1_4$, $S_{22}$, $S_{24}$ et $S_{26}$ sont transmis par des moyens de communication sans fil, par exemple par radio.

L'unité de commande 20 est utilisée pour piloter la pompe 12 et la vanne trois voies 14 en fonction d'une valeur de consigne de la pression d'alimentation du sous-ensemble 10 en produit de traitement liquide. Le capteur de pression 24 permet d'adresser à l'unité 20 un signal de retour, ou de contre-réaction, puisqu'il délivre un signal représentatif de la pression dans le tronçon 86 de la conduite 8, la pression dans ce tronçon pouvant être considérée comme égale à la pression d'alimentation de l'ensemble 10.

La régulation utilisée dans le système 2 est basée sur une modélisation du fonctionnement de chaque buse 68 sur la base d'une courbe du type de celle présentée à la figure 1 où le débit en litres/minute et considéré comme proportionnel à la racine carrée de la pression en bars. En d'autres termes, la relation de l'équation 1 mentionnée ci-dessus est considérée comme respectée sur la plage de fonctionnement de chaque buse 68, à la fois en termes de pression et en termes de débit.

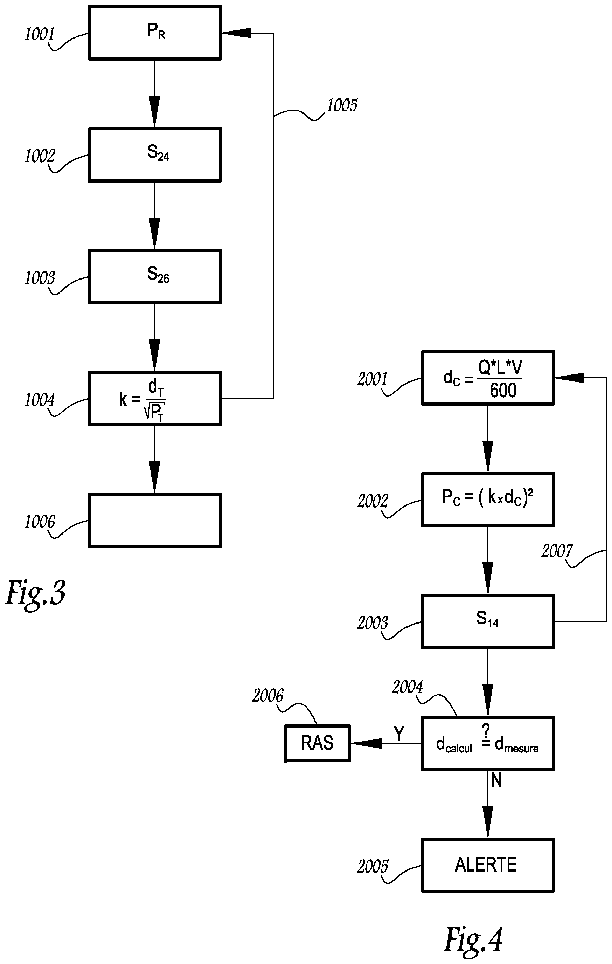

Lors de la mise en service du système 1001, on met en oeuvre le procédé représenté par le schéma bloc de la figure 3.

Dans une première étape 1001, une valeur est fixée pour une pression de référence $P_R$ d'alimentation des buses.

Dans une deuxième étape 1002 le système 2 est mis en marche pour pulvériser de l'eau, à poste fixe, en utilisant la pression de référence $P_R$ comme pression de consigne d'alimentation des buses 68. En d'autres termes, la vanne trois voies 14 est pilotée pour alimenter les buses 68 avec une pression $P_R$ délivrée au sous-ensemble 10 par la conduite 8. On considère ici que la pression dans le tronçon 86 de la conduite 8 est égale ou pratiquement égale à la pression d'alimentation des buses 68, les pertes de charge dans les vannes 102 à 106 et dans les conduits 182 à 186 étant prises en compte dans l'étalonnage préalable du capteur de pression.

Lorsque le système 2 fonctionne en régime établi, et alors que les buses 68 pulvérisent effectivement de l'eau, le débitmètre 26 est utilisé pour mesurer le débit effectif total d'eau dans la conduite 8. Il fournit un signal correspondant $S_{26}$ à l'unité 20.

En même temps, tout au long l'étape 1002, le capteur 24 fournit à l'unité 20 un signal $S_{24}$ représentatif de la pression d'alimentation des buses 68. En fonctionnement établi, la valeur de la pression mesurée totale $P_T$ transmise par le signal $S_{24}$ doit être égale à la valeur de la pression de référence $P_R$, aux tolérances de mesure près.

Sur la base des signaux $S_{24}$ et $S_{26}$ et lors d'une étape ultérieure 1004, l'unité 20 est capable de calculer le coefficient de proportionnalité entre le débit total $d_T$ mesuré par le débitmètre 26 et la pression totale $P_T$ mesurée par le capteur de pression 24 selon la relation :

$$k = d_T / \sqrt{P_T} \qquad\qquad \text{équation (2)}$$

où k est un coefficient de proportionnalité de valeur constante, $d_T$ est le débit total détecté par le débitmètre 26 et $P_T$ est la pression détectée par le capteur 24, cette pression étant normalement égale à la pression de référence $P_R$.

En variante, le coefficient k peut être calculé à partir de l'équation :

$$k = d_T / \sqrt{P_R} \qquad\qquad \text{équation (2bis)}$$

où $P_R$ est la valeur de la pression de référence fixée à l'étape 1001.

Au terme de cette étape 1004, le coefficient k est donc déterminé par le calcul, en tenant compte de la valeur de la pression de référence $P_R$ fixée à l'étape 1001, directement ou à travers la pression $P_T$, et pour l'ensemble de la rampe 6, en considérant que les buses 68 se comportent de la même façon.

En considérant que le débit d'une buse est effectivement proportionnel à la racine carrée de sa pression d'alimentation, on peut fixer une seule valeur de pression de référence $P_R$, par exemple égale à trois bars, et déterminer le coefficient de proportionnalité k pour toute la plage de fonctionnement des buses.

Selon une approche plus précise, et en considérant que la notion de proportionnalité est une approximation, plusieurs pressions de référence $P_R$ peuvent être fixées successivement et plusieurs coefficients de proportionnalité k peuvent être déterminés en appliquant les étapes 1001 à 1004 de façon successive, comme représenté par la flèche d'itération 1005 à la figure 3. Ces coefficients sont alors utilisés dans le processus de commande, en fonction de la pression de commande effectivement utilisée.

Le procédé mentionné ci-dessus, dans lequel de l'eau est projetée par les buses 68 lors de l'étape 1002, est particulièrement adapté lorsque le produit de traitement a une densité proche de 1, notamment lorsque ce produit de traitement est à base d'eau.

Dans le cas où la densité du produit de traitement diffère de 1, la valeur du coefficient k calculée à l'étape 1004 peut être adaptée lors d'une étape facultative 1006 dans laquelle on tient compte de la densité effective du produit de traitement.

En variante, toujours lorsque la densité du produit de traitement est différente de 1, on peut projeter non pas de l'eau mais le produit de traitement liquide lui-même lors de l'étape 1002. Dans ce cas, le coefficient k calculé à l'étape 1004 tient directement compte de la densité effective du produit à épandre, qui peut être, par exemple, un produit azoté liquide, avec une densité de l'ordre de 1,3 ou un antigel, avec une densité de l'ordre de 2. De façon générale, l'invention permet d'épandre des liquides dont la densité est comprise entre 0,8 et 4.

On remarque que le procédé de la figure 3 peut être réalisé de façon totalement automatique puisqu'il suffit à l'opérateur de lancer l'étape 1001 pour que les étapes 1002 à 1004, éventuellement 1005 et 1006, se déroulent automatiquement. En outre, la sélection de la pression de référence à l'étape 1001 peut avoir lieu de façon automatique, sur la base d'une ou plusieurs valeurs stockées dans la mémoire 202. Par ailleurs, les étapes de pilotage et de calcul du procédé d'invention sont effectuées par le calculateur 204 et la ou les valeur(s) du coefficient k déterminée(s) comme résultat de ce procédé est ou sont stockée(s) dans la mémoire 202, en vue d'une utilisation ultérieure.

Dans l'exemple mentionné ci-dessus, le calcul du coefficient k est effectué suite à une étape 1002 dans laquelle toutes les buses 68 de la rampe 6 sont en service.

En variante, le coefficient k peut être déterminé pour chaque ensemble de buses appartenant à un tronçon 62, 64 ou 66. Pour ce faire, les étapes 1001 à 1004, et éventuellement 1005 et 1006, sont mises en oeuvre tronçon après tronçon, en ouvrant et fermant sélectivement les électrovannes 102 à 106. Cette approche augmente la précision de la détermination du coefficient k et, par voie de conséquence, de la régulation obtenue grâce à l'unité 20 lorsque celle-ci pilote, la vanne 14 et l'ensemble 10, en tenant compte du signal de contre-réaction $S_{24}$ délivré par le capteur 24.

Lorsqu'il convient d'utiliser le système 2 pour épandre un produit de traitement, l'opérateur doit normalement respecter une valeur de dose à l'hectare représentée par une quantité nominale Q de produit appliqué sur un hectare de champ traité. Cette dose à l'hectare exprimée en litres/hectare peut être reliée au débit de la rampe 6 exprimé en litres/minute selon la relation :

$$d = Q \times L \times V/600 \qquad\qquad \text{équation (3)}$$

où d est le débit de la rampe en litres/minute, L est la largeur de travail de la rampe 6, V est la vitesse d'avance du tracteur T en Km/h.

Ainsi, lorsqu'une valeur de consigne de dose à l'hectare Q est fournie à l'unité 20 sous la forme d'un signal électronique $S_Q$, le calculateur 204 est capable de déterminer, à chaque instant en cours de fonctionnement du système 2, et en fonction de la largeur de travail de la rampe 6 et de la vitesse d'avance du tracteur T, un débit $d_C$ de consigne instantané en produit à épandre. Ceci a lieu lors d'une première étape 2001 d'un procédé de commande du système 2.

Dans une deuxième étape 2002, l'unité 20 détermine la pression d'alimentation des buses 68, c'est-à-dire la pression de consigne instantanée $P_C$, en inversant l'équation 1 sous la forme d'une équation :

$$P_C = (k \times d_C)^2 \qquad\qquad \text{équation (4)}$$

Il est alors possible à l'unité 20 d'utiliser la valeur de la pression de consigne instantanée calculée $P_C$ pour la comparer au signal $S_{24}$ de la pression mésurée. Lors d'une étape 2003 et en fonction de la valeur de la pression détectée par le capteur 24 dans le tronçon 86 de la conduite 8, l'unité de commande 20 pilote la vanne trois voies 14, grâce au signal $S_{14}$ pour, le cas échéant, ajuster le débit de produit de traitement dans la conduite 8 et, par voie de conséquence, la pression dans le tronçon 86. Au terme de l'étape 2003, le procédé redémarre à l'étape 2001 pour tenir compte d'une éventuelle variation de la vitesse V, ce que représente la flèche d'itération 2007. La fréquence d'itération des étapes 2001 à 2003 est inférieure à 1 seconde.

Selon un aspect avantageux et optionnel de l'invention, le fait que le système 2 comprend à la fois un capteur de pression 24 et un débitmètre 26 permet de détecter le bouchage éventuel d'une buse. En effet, deux débits peuvent être pris en compte par l'unité 20.

D'une part, l'unité 20 peut calculer un débit total de produit de traitement en utilisant l'équation 1 et en connaissant la valeur de la pression de consigne. Ce débit total calculé $d_{calcul}$ peut ainsi s'exprimer :

$$d_{calcul} = k \times \sqrt{P_C} \qquad\qquad \text{(équation 5)}$$

D'autre part, le signal $S_{26}$ est représentatif du débit mesuré $d_{mesure}$ détecté par le débitmètre 26.

Il est alors possible à l'unité 20 de comparer, dans une étape 2004 de procédé de commande, le débit calculé $d_{calcul}$ et le débit mesuré $d_{mesure}$ et de réagir en cas d'écart significatif entre ces deux débits, par exemple si cet écart est supérieur à 5% du débit mesuré. Dans ce cas, l'unité 20 peut émettre une alerte à destination de l'opérateur dans une étape 2005. Dans le cas où l'écart constaté est nul ou non significatif, il est considéré que le fonctionnement est correct, au cours d'une étape 2006.

Les étapes 2004 à 2006 peuvent avoir lieu à une fréquence différente des étapes 2001 à 2003, par exemple égale à 5 secondes.

On remarque que l'étape 2004, qui permet la détection du bouchage éventuel d'une buse, ne serait pas possible si le système d'épandage 2 était équipé seulement d'un capteur de pression ou seulement d'un débitmètre.

La combinaison des signaux $S_{24}$ et $S_{26}$ émis par le capteur de pression 24 et le débitmètre 26 permet également de déterminer de façon simple et précise le volume épandu au cours d'une opération, grâce à l'intégration du signal $S_{26}$ au cours de l'opération et la valeur de la surface traitée en hectare, détectée grâce au capteur 22.

Lorsque la buse comprend plusieurs tronçons, comme envisagé ci-dessus, il est possible de mesurer le débit total de la rampe en activant tous ses tronçons. Il est également possible de mesurer le débit de la rampe lorsqu'un tronçon seul est désactivé. Par différence, on déduit le débit de ce tronçon. Cette opération peut être répétée pour chacun des tronçons.

Il est alors possible de fournir à l'unité 20 des informations relatives, d'une part, au nombre total de tronçons de la rampe et, d'autre part à la largeur totale de la rampe. En considérant que la largeur de traitement de chaque tronçon est proportionnelle à son débit, il est possible de connaître la largeur de traitement de chaque tronçon par une règle de trois entre le débit de ce tronçon et le débit total de la rampe, lorsqu'on connaît la largeur de traitement de la rampe. On comprend que ceci peut être mis en oeuvre par l'unité 20 sans connaître le nombre de buses 68 de chaque tronçon, ni la largeur $\ell_6$ de l'espace interbuse entre les buses d'un tronçon.

La largeur de traitement de chaque tronçon étant connue, il est possible à l'unité 20, qui connaît en permanence le nombre de tronçons en service puisque c'est elle qui le détermine au moyen du signal $S_{10}$, de connaître la largeur de traitement obtenue avec la rampe 6 en chaque point du champ. Le cumul de la surface traitée peut donc être obtenu en intégrant la largeur de traitement sur une durée correspondant à une opération d'épandage, sans avoir à renseigner préalablement le nombre de buses par tronçon ni la largeur de l'espace interbuse.

Les caractéristiques techniques des modes de réalisation et variantes envisagées ci-dessus peuvent être combinées entre elles.

## Revendications

1. Procédé automatique de détermination d'au moins un paramètre (k) de modélisation d'un système (2) d'épandage d'un produit de traitement du sol ou de culture, ce système comprenant une rampe (6) de pulvérisation équipée de buses (68), des moyens (12, 14) d'alimentation des buses en produit de traitement et une unité électronique (20) prévue pour commander les moyens d'alimentation en fonction d'une valeur de consigne ($P_C$) de la pression d'alimentation des buses en produit de traitement, ce procédé comprenant des étapes consistant à

   a) fixer (1001) une pression de référence ($P_R$) d'alimentation des buses ;
   b) pulvériser un produit (1002), en utilisant la pression de référence comme pression de consigne d'alimentation des buses (68) et en mesurant ($S_{24}$) la pression d'alimentation ($P_T$) des buses ;
   c) mesurer (1003, $S_{26}$), à l'aide d'un débitmètre (26), le débit ($d_T$) de produit de traitement alimentant la rampe ;
   d) calculer (1004) le paramètre de modélisation (k) en fonction de la valeur mesurée ($d_T$) du débit et de la valeur mesurée de la pression ($P_T$) d'alimentation des buses ou de la pression de référence ($P_R$) ;

   **caractérisé en ce que** le produit pulvérisé lors de l'étape b) est de l'eau et la valeur du paramètre (k) calculée à l'étape d) est corrigée, lors d'une étape e) ultérieure (1006), en tenant compte de la densité du produit de traitement.

2. Procédé selon la revendication 1, **caractérisé en ce que** lors de l'étape b), toutes les buses (68) de la rampe (6) sont utilisées et le paramètre (k) calculé lors de l'étape d) est valable pour l'ensemble de la rampe.

3. Procédé selon la revendication 1, **caractérisé en ce que** la rampe est composée de plusieurs tronçons (62, 64, 66) comprenant chacun au moins une buse (68) et **en ce que** les étapes b), c) et d) sont mises en oeuvre tronçon par tronçon.

4. Procédé selon l'une des revendications précédentes, **caractérisé en ce que** les étapes a) à d) sont répétées (1005) pour plusieurs valeurs de pression de référence ($P_R$).

5. Procédé selon l'une des revendications précédentes, **caractérisé en ce que** le paramètre déterminé est un coefficient de proportionnalité (k) entre

- a racine carrée de la valeur de la pression mesurée ou de la pression de référence fixée à l'étape a),
- la valeur du débit ($d_T$) mesurée à l'étape c).

**6.** Procédé selon l'une des revendications précédentes, **caractérisé en ce que** le procédé est réalisé de façon totalement automatique.

**7.** Procédé de commande d'un système d'épandage d'un produit de traitement de sol ou de culture, ce système comprenant une rampe (6) de pulvérisation équipée de buses (68), des moyens (10, 12, 14) d'alimentation des buses en produit de traitement et une unité électronique (20) prévue pour commander les moyens d'alimentation en fonction d'une valeur de consigne ($P_C$) de la pression d'alimentation des buses en produit liquide, **caractérisé en ce qu'**il comprend une étape (2002) de détermination de la valeur de consigne ($P_C$) de pression en fonction, d'une part, d'une valeur de consigne de débit ($d_C$) de produit de traitement et, d'autre part, d'un paramètre (k) déterminé par un procédé selon l'une des revendications précédentes et **en ce que** le procédé de commande comprend une étape supplémentaire (2004) de détection du bouchage éventuel d'une buse (68) par comparaison

- d'un débit total ($d_{calcul}$) de produit de traitement calculé, à l'aide du paramètre déterminé (k), en fonction de la valeur de consigne ($P_C$) de pression utilisée pour commander les moyens d'alimentation,
- d'un débit total mesuré ($d_{mesure}$) par le débitmètre (26).

**8.** Procédé selon la revendication 7, **caractérisé en ce que** la valeur de consigne de pression est déterminée sur la base d'une équation de type

$$P_c = (k \times d_c)^2$$

où $P_c$ est la valeur de consigne de pression, $d_c$ est la valeur de consigne de débit, k est le paramètre déterminé.

**9.** Procédé selon l'une des revendications 7 ou 8, **caractérisé en ce qu'**il comprend

- une première étape (2001) de détermination d'un débit ($d_c$) de consigne instantanée en produit à épandre ;
- une deuxième étape (2002) de détermination d'une pression de consigne instantanée ($P_c$) ;
- une troisième étape (2003) de comparaison de la pression ($P_c$) déterminée à la deuxième étape avec un signal ($S_{24}$) représentatif d'une pression mesurée ;
- une quatrième étape (2004) de comparaison d'un débit ($d_{calcul}$) calculé à partir de la pression de consigne instantanée ($P_c$) avec un débit ($d_{mesure}$) mesuré par le débitmètre (26) utilisé à l'étape c) ;
- une cinquième étape (2005) d'émission d'une alerte en cas d'écart significatif constaté à la quatrième étape ; et
- une sixième étape (2006) où le fonctionnement est considéré comme correct et **en ce que** les quatrième à sixième étapes (2004-2006) ont lieu à une fréquence différente des première à troisième étapes (2001-2003).

**10.** Système d'épandage (2) embarqué sur un engin (T) roulant pour la mise en oeuvre d'un procédé selon l'une des revendications précédentes, ce système comprenant :

- une cuve (4) de produit de traitement à épandre,
- au moins une rampe (6) de buses (68) de pulvérisation du produit,
- des moyens (10, 12, 14) d'alimentation de la rampe à partir de la cuve,
- un capteur de la pression (24) du produit dans un conduit (8) d'alimentation de la rampe,
- un débitmètre (26) apte à détecter le débit de produit de traitement alimentant la rampe
- une unité électronique (20) prévue pour :

    - déterminer automatiquement (1001-1004) le paramètre de modélisation (k) sur la base, entre autres, d'un signal de sortie ($S_{26}$) du débitmètre (26) et d'un signal ($S_{24}$) de sortie du capteur de pression (24), ce signal de sortie étant obtenu lorsque le produit pulvérisé est de l'eau et le paramètre de modélisation (k) étant déterminé après application d'une correction (1006) tenant compte de la densité du produit de traitement,
    - déterminer automatiquement (2002) une valeur de consigne ($P_C$) de pression d'alimentation de la rampe (6) en produit à épandre en fonction, d'une part, d'une valeur de consigne de débit ($d_C$) de produit de traitement et, d'autre part, du paramètre déterminé (k) et,
    - commander automatiquement (2003) les moyens d'alimentation (10, 12, 14) en fonction de la valeur de consigne de pression.

**Patentansprüche**

1. Automatisches Verfahren zur Bestimmung wenigstens eines Parameters (k) zur Modelierung eines Systems (2) zum Streuen eines Produkts zur Behandlung des Bodens oder einer Kultur, wobei dieses System eine Zerstäubungsrampe (6) umfasst, die mit Düsen (68) ausgestattet ist, Mittel (12, 14) zur Versorgung der Düsen mit dem Behandlungsprodukt, sowie eine elektronische Einheit (20), die dazu ausgelegt ist, die Versorgungsmittel als Funktion eines Sollwerts (Pc) des Versorgungsdrucks der Düsen mit dem Behandlungsprodukt zu steuern, wobei dieses Verfahren die folgenden Schritte umfasst:

   a) Fixieren (1001) eines Referenzdrucks ($P_R$) zur Versorgung der Düsen;
   b) Zerstäuben eines Produkts (1002) unter Verwendung des Referenzdrucks als Solldruck zur Versorgung der Düsen (68) und unter Messung ($S_{24}$) des Versorgungsdrucks ($P_T$) der Düsen;
   c) Messen (1003, $S_{26}$), mit Hilfe eines Durchflussmessers (26), des Durchflusses ($d_T$) des Behandlungsprodukts, mit dem die Rampe versorgt wird;
   d) Berechnen (1004) des Modelierungsparameters (k) als Funktion des gemessenen Werts ($d_T$) des Durchflusses und des gemessenen Werts des Versorgungsdrucks ($P_T$) der Düsen oder des Referenzdrucks ($P_R$);

   **dadurch gekennzeichnet, dass** das während des Schritts b) zerstäubte Produkt Wasser ist, und der im Schritt d) berechnete Wert des Parameters (k) während eines späteren Schritts e) (1006) unter Berücksichtigung der Dichte des Behandlungsprodukts korrigiert wird.

2. Verfahren nach Anspruch 1, **dadurch gekennzeichnet, dass** während des Schritts b) alle Düsen (68) der Rampe (6) verwendet werden, und der während des Schritts d) berechnete Parameter (k) für die Gesamtheit der Rampe gültig ist.

3. Verfahren nach Anspruch 1, **dadurch gekennzeichnet, dass** die Rampe aus mehreren Abschnitten (62, 64, 66) zusammengesetzt ist, die jeweils wenigstens eine Düse (68) umfassen, und dass die Schritte b), c) und d) Abschnitt für Abschnitt durchgeführt werden.

4. Verfahren nach einem der vorhergehenden Ansprüche, **dadurch gekennzeichnet, dass** die Schritte a) bis d) für mehrere Referenzdruckwerte ($P_R$) wiederholt werden (1005).

5. Verfahren nach einem der vorhergehenden Ansprüche, **dadurch gekennzeichnet, dass** der bestimmte Parameter ein Proportionalitätskoeffizient (k) ist zwischen

   - der Quadratwurzel des Werts des gemessenen Drucks oder des im Schritt a) fixierten Referenzdrucks,
   - dem im Schritt c) gemessenen Wert des Durchflusses ($d_T$).

6. Verfahren nach einem der vorhergehenden Ansprüche, **dadurch gekennzeichnet, dass** das Verfahren auf vollständig automatische Weise realisiert wird.

7. Verfahren zur Steuerung eines Systems zum Streuen eines Produkts zur Behandlung des Bodens oder einer Kultur, wobei dieses System eine Zerstäubungsrampe (6) umfasst, die mit Düsen (68) ausgestattet ist, Mittel (10, 12, 14) zur Versorgung der Düsen mit dem Behandlungsprodukt, sowie eine elektronische Einheit (20), die dazu ausgelegt ist, die Versorgungsmittel als Funktion eines Sollwerts (Pc) des Versorgungsdrucks der Düsen mit einem flüssigen Produkt zu steuern, **dadurch gekennzeichnet, dass** es einen Schritt (2002) der Bestimmung des Sollwerts ($P_C$) des Drucks umfasst als Funktion einerseits eines Sollwerts eines Durchflusses ($d_C$) des Behandlungsprodukts und andererseits eines Parameters (k), der durch ein Verfahren nach einem der vorhergehenden Ansprüche bestimmt wird, und dass das Steuerverfahren einen zusätzlichen Schritt (2004) der Detektion einer eventuellen Verstopfung einer Düse (68) umfasst durch Vergleichen

   - eines totalen Durchflusses ($d_{calcul}$) des Behandlungsprodukts, berechnet mit Hilfe des bestimmten Parameters (k) als Funktion des Sollwerts ($P_C$) des Drucks, der zur Steuerung der Versorgungsmittel verwendet wird,
   - eines totalen Durchflusses ($d_{mesure}$), der durch den Durchflussmesser (26) gemessen wird.

**8.** Verfahren nach Anspruch 7, **dadurch gekennzeichnet, dass** der Sollwert des Drucks bestimmt wird auf Basis einer Gleichung vom Typ

$$P_c = (k \times d_c)^2$$

wobei $P_c$ der Sollwert des Drucks ist, $d_c$ der Sollwert des Durchflusses ist, und k der bestimmte Parameter ist.

**9.** Verfahren nach einem der Ansprüche 7 oder 8, **dadurch gekennzeichnet, dass** es umfasst:

- einen ersten Schritt (2001) der Bestimmung eines momentanen Solldurchflusses ($d_c$) des zu streuenden Produkts;
- einen zweiten Schritt (2002) der Bestimmung eines momentanen Solldrucks ($P_c$);
- einen dritten Schritt (2003) des Vergleichens des im zweiten Schritt bestimmten Drucks ($P_c$) mit einem Signal ($S_{24}$), das für einen gemessenen Druck repräsentativ ist;
- einen vierten Schritt (2004) des Vergleichens eines Durchflusses ($d_{calcul}$), der berechnet wird ausgehend von dem momentanen Solldruck ($P_c$), mit einem Durchfluss ($d_{mesure}$), der mittels des im Schritt c) verwendeten Durchflussmessers (26) gemessen wird;
- einen fünften Schritt (2005) des Ausgebens eines Alarms im Fall einer im vierten Schritt festgestellten signifikanten Abweichung; und
- einen sechsten Schritt (2006), wo die Funktion als korrekt betrachtet wird, und dass der vierte bis sechste Schritt (2004-2006) mit einer anderen Frequenz als der erste bis dritte Schritt (2001-2003) erfolgen.

**10.** Streusystem (2), das an einem Fahrgerät (T) vorgesehen ist, zur Durchführung eines Verfahrens nach einem der vorhergehenden Ansprüche, wobei dieses System Folgendes umfasst:

- ein Gefäß (4) mit zu streuendem Behandlungsprodukt,
- wenigstens eine Rampe (6) mit Düsen (68) zur Zerstäubung des Produkts,
- Mittel (10, 12, 14) zur Versorgung der Rampe ausgehend von dem Gefäß,
- einen Drucksensor (24) für das Produkt in einer Versorgungsleitung (8) der Rampe,
- einen Durchflussmesser (26), der dazu ausgelegt ist, den Durchfluss des Behandlungsprodukts zu detektieren, mit dem die Rampe versorgt wird,
- eine elektronische Einheit (20), die zu Folgendem ausgelegt ist:

  - automatisches Bestimmen (1001-1004) des Modelierungsparameters (k) auf Basis unter anderem eines Ausgangssignals ($S_{26}$) des Durchflussmessers (26) und eines Ausgangssignals ($S_{24}$) des Drucksensors (24), wobei dieses Ausgangssignal erhalten wird, wenn das zerstäubte Produkt Wasser ist, und der Modelierungsparameter (k) bestimmt wird nach Anwendung einer Korrektur (1006), die die Dichte des Behandlungsprodukts berücksichtigt,
  - automatisches Bestimmen (2002) eines Sollwerts ($P_C$) des Versorgungsdrucks der Rampe (6) mit zu streuendem Produkt als Funktion einerseits eines Sollwerts des Durchflusses ($d_C$) des Behandlungsprodukts, und andererseits des bestimmten Parameters (k), und
  - automatisches Steuern (2003) der Versorgungsmittel (10, 12, 14) als Funktion des Sollwerts des Drucks.

**Claims**

**1.** An automatic method for determining at least one parameter (k) for modelling a system (2) for spreading a soil or crop treatment product, this system comprising a spraying ramp (6) equipped with nozzles (68), means (12, 14) for supplying the nozzles with treatment product and an electronic unit (20) provided to control the supplying means as a function of a set point ($P_C$) of the pressure of supplying the nozzles with treatment product, this method comprising steps of

  a) setting (1001) a reference pressure ($P_R$) of supplying the nozzles;
  b) spraying a product (1002), using the reference pressure as the set point pressure of supplying the nozzles (68) and measuring ($S_{24}$) the pressure ($P_T$) of supplying the nozzles;
  c) measuring (1003, $S_{26}$), using a flow rate meter (26), the flow rate ($d_T$) of treatment product supplying the ramp;

d) calculating (1004) the modelling parameter (k) as a function of the measured value ($d_T$) of the flow rate and the measured value of the pressure ($P_T$) of supplying the nozzles or the reference pressure ($P_R$);

**characterised in that** the product sprayed during step b) is water and the value of the parameter (k) calculated in step d) is corrected, during a subsequent step e) (1006), by taking the specific gravity of the treatment product into account.

2. The method according to claim 1, **characterised in that** during step b), all the nozzles (68) of the ramp (6) are used and the parameter (k) calculated during step d) is valid for the entire ramp.

3. The method according to claim 1, **characterised in that** the ramp consists of several segments (62, 64, 64) each comprising at least one nozzle (68) and **in that** steps b), c) and d) are implemented segment by segment.

4. The method according to one of the preceding claims, **characterised in that** steps a) to d) are repeated (1005) for several reference pressure values ($P_R$).

5. The method according to one of the preceding claims, **characterised in that** the parameter determined is a proportionality coefficient (k) between

   - a square root of the value of the pressure measured or the reference pressure set in step a),
   - the value of the flow rate ($d_T$) measured in step c).

6. The method according to one of the preceding claims, **characterised in that** the method is made fully automatically.

7. A method for controlling a system for spreading a soil or crop treatment product, this system comprising a spraying ramp (6) equipped with nozzles (68), means (10, 12, 14) for supplying the nozzles with treatment product and an electronic unit (20) provided to control the supplying means as a function of a set point ($P_C$) of the pressure of supplying the nozzles with liquid product, **characterised in that** it comprises a step (2002) of determining the pressure set point ($P_C$) as a function, on the one hand, of a flow rate set point ($d_C$) of treatment product and, on the other hand, a parameter (k) determined by a method according to one of the preceding claims and **in that** the control method comprises a further step (2004) of detecting a possible clogging of a nozzle (68) by comparing

   - a total flow rate ($d_{calcul}$) of treatment product calculated, using the parameter (k) determined, as a function of the pressure set point ($P_C$) used to control the supplying means,
   - a total flow rate ($d_{mesure}$) measured by the flow rate meter (26).

8. The method according to claim 7, **characterised in that** the pressure set point is determined based on an equation of the type

$$P_c = (k \times d_c)^2$$

where $P_c$ is the pressure set point, $d_c$ is the flow rate set point, k is the determined parameter.

9. The method according to one of claims 7 and 8, **characterised in that** it comprises

   - a first step (2001) of determining an instantaneous set point flow rate ($d_c$) for the product to be spread;
   - a second step (2002) of determining an instantaneous set point pressure ($P_c$);
   - a third step (2003) of comparing the pressure ($P_c$) determined in the second step with a signal ($S_{24}$) representative of a measured pressure;
   - a fourth step (2004) of comparing a flow rate ($d_{calcul}$) calculated from the instantaneous set point pressure ($P_c$) with a flow rate ($d_{mesure}$) measured by the flow rate meter (26) used in step c);
   - a fifth step (2005) of emitting an alert in case of a significant deviation observed in the fourth step; and
   - a sixth step (2006) where the operation is considered as proper
   and **in that** the fourth to sixth steps (2004-2006) occur at a frequency different from the first to third steps (2001-2003).

**10.** A spreading system (2) onboard a travelling machine (T) for implementing a method according to one of the preceding claims, this system comprising:

- a vessel (4) of treatment product to be spread,
- at least one ramp (6) of nozzles (68) for spraying the product,
- means (10, 12, 14) for supplying the ramp from the vessel,
- a sensor for the pressure (24) of the product in a ramp supplying conduit (8),
- a flow rate meter (26) able to detect the flow rate of treatment product supplying the ramp
- an electronic unit (20) provided to:
- automatically determine (1001-1004) the modelling parameter (k) based, among other things, on an output signal ($S_{26}$) of the flow rate meter (26) and an output signal ($S_{24}$) of the pressure sensor (24), this output signal being obtained when the sprayed product is water and the modelling parameter (k) being determined after applying a correction (1006) taken the specific gravity of the treatment product into account,
- automatically determine (2002) a set point ($P_c$) of pressure of supplying the ramp (6) with product to be spread as a function, on the one hand, of a flow rate set point ($d_c$) of treatment product and, on the other hand, the determined parameter (k) and
- automatically control (2003) the supplying means (10, 12, 14) as a function of the pressure set point.

*Fig.1*

*Fig.2*

EP 2 705 751 B1

1001 — $P_R$

1002 — $S_{24}$

1003 — $S_{26}$

1004 — $k = \dfrac{d_T}{\sqrt{P_T}}$

1005

1006

**Fig.3**

2001 — $d_C = \dfrac{Q*L*V}{600}$

2002 — $P_C = (k_x d_C)^2$

2003 — $S_{14}$

2007

2006 — RAS

2004 — $d_{calcul} \overset{?}{=} d_{mesure}$

Y

N

2005 — ALERTE

**Fig.4**

## RÉFÉRENCES CITÉES DANS LA DESCRIPTION

**Documents brevets cités dans la description**

- FR 2519162 A

**Littérature non-brevet citée dans la description**

- **ESS et al.** Implementing Site-Specific Management : Sprayer Technology - Controlling Application Rate On-The-Go. Purdue University, 15 Juillet 2010